# EUROPEAN PATENT APPLICATION

(11) **EP 4 525 500 A1**
(43) Date of publication of application: **19.03.2025**
(21) Application number: 23803847.5
(22) Date of filing: 10.05.2023
(51) Int. Cl.: H04W 12/122, B64D 45/00, H04W 12/069, H04W 12/65, H04W 4/42

(54) **METHOD AND DEVICE FOR VERIFYING AIRCRAFT STATUS INFORMATION**

(30) Priority: 10.05.2022 KR 20220057003; 09.05.2023 KR 20230059954
(71) Applicant: Hyundai Motor Company, Seoul 06797 (KR); Kia Corporation, Seocho-gu Seoul 06797 (KR)
(72) Inventor: MIN, Young Bin, Gwangmyeong-si, Gyeonggi-do 14305 (KR); PARK, Seung Wook, Yongin-si, Gyeonggi-do 16847 (KR)
(74) Representative: Isarpatent
(86) International application number: PCT/KR2023/006368
(87) International publication number: WO 2023/219424

(57) **Abstract**

A method and a device for verifying aircraft status information are disclosed. According to at least one embodiment of the present disclosure, a method performed by a UAM aircraft for verifying aircraft status information may include receiving first state information of a first UAM aircraft, verifying the first status information, transmitting anomaly information of the first UAM aircraft to a ground control system (GCS) when the first status information is not verified, receiving rule set update information from the GCS when the GCS determines that the first status information is information transmitted by an attacker, and updating a rule set based on the rule set update information.

## Description

### CROSS-REFERENCE TO RELATED APPLICATION

This application claims priority from Korean Patent Application No. 10-2022-0057003 filed on May 10, 2022, and Korean Patent Application No. 10-2023-0059954 filed on May 9, 2023, the disclosures of which are incorporated by reference herein in their entirety.

### [Technical Field]

The present disclosure in some embodiments relates to methods and devices for verifying aircraft status information. More particularly, the present disclosure relates to methods and devices for verifying status information received by a ground control system (GCS) from an aircraft.

### [Background]

Urban Air Mobility (UAM) is a three-dimensional urban air traffic system that connects ground and air travel and is a next-generation traffic system that can transport people and cargo over urban areas. As the UAM market expands, UAM vehicles will offer a new transportation means to the public away from the urban traffic congestion. A new domain will then begin to open and repurpose the major urban land that has been occupied by the traditionally necessary facilities such as numerous roads and parking lots to allow the ground traffic flow.

With the increased use of aircraft, the aircraft will become more vulnerable. Thus, ensuring the flight safety of the aircraft is of utmost importance for the successful commercialization of the UAM. For example, a third person, not the pilot, hacking the cockpit with the aircraft controls may be able to take over the control, risking collisions with other airborne vehicles. In addition, because aircraft are exposed to cyberattacks from external sources, an attacker sending the aircraft distorted information such as the location of other aircraft can cause faults with the aircraft's control and management system. Accordingly, there is a need to verify the aircraft status information to systematically manage the aircraft.

### [Disclosure]

### [Technical Problem]

The present disclosure in some embodiments seeks to provide a method and a device for receiving and verifying status information from an urban air mobility (UAM) aircraft.

The present disclosure also seeks to provide a method and a device for determining false information from an external attacker.

Further, the present disclosure aims to provide a method and a device for verifying data by comparing previous status information of a UAM aircraft with current status information.

Further, the present disclosure aims to provide a method and a device for protecting a plurality of UAM aircraft from an external attacker.

### [Summary]

At least one aspect of the present disclosure provides a method performed by an urban air mobility (UAM) aircraft for verifying aircraft status information, the method including receiving first state information of a first UAM aircraft, verifying the first status information, transmitting anomaly information of the first UAM aircraft to a ground control system (GCS) when the first status information is not verified, receiving rule set update information from the GCS when the GCS determines that the first status information is information transmitted by an attacker, and updating a rule set based on the rule set update information.

Another aspect of the present disclosure provides a method performed by a GCS for verifying aircraft status information, the method including receiving first status information of a first UAM aircraft, retrieving second state information present in a storage unit, obtaining verification information based on a difference between the first state information and the second state information, verifying the first state information based on the verification information and a flight plan of the first UAM aircraft, and determining whether the first state information is equivalent to information transmitted by an attacker when the first state information is not verified.

Yet another aspect of the present disclosure provides a method performed by a GCS for verifying aircraft status information, the method including receiving, from one or more first UAM aircraft, anomaly information of a second UAM aircraft when the one or more first UAM aircraft receive first status information of the second UAM aircraft and the first status information is not verified by the one or more first UAM aircraft, and determining whether the one or more first UAM aircraft have falsely transmitted the anomaly information.

Yet another aspect of the present disclosure provides a ground control system (GCS) including a memory and at least one processor, wherein at least one processor may be configured to receive the first status information of a first UAM aircraft, retrieve the second state information present in a storage unit, obtain verification information based on a difference between the first state information and the second state information, verify the first state information based on the verification information and a flight plan of the first UAM aircraft, and when the first state information is not verified, determine whether the first state information is equivalent to information transmitted by an attacker, and wherein the second status information may be equivalent to information received before the receiving of the first status information.

### [Advantageous Effects]

As described above, one aspect of the present disclosure can provide a method and a device for receiving and verifying status information from a UAM aircraft.

The present disclosure can also provide a method and a device for determining false information from an external attacker.

Further, the present disclosure can provide a method and a device for verifying data by comparing previous status information of a UAM aircraft with current status information.

Further, the present disclosure can provide a method and a device for protecting a plurality of UAM aircraft from an external attacker.

The effects of the present disclosure are not limited to those mentioned above, and other effects not mentioned will be apparent to one of ordinary skill in the art from the following description.

### [Brief Description of the Drawings]

FIG. 1 is a diagram illustrating a communication link type of an urban air mobility (UAM) service.
FIG. 2 is a diagram illustrating the architecture of UAM aircraft networks and systems.
FIGS. 3A and 3B are diagrams illustrating a system for remotely piloting a UAM aircraft.
FIG. 4 is a diagram illustrating a relationship between a UAM aircraft, an attacker, and external entities.
FIG. 5 is a diagram illustrating an attacker's threat to a transportation means.
FIG. 6 is a diagram illustrating threats through the impersonation of attackers.
FIG. 7 is a diagram illustrating the relationship between an urban air mobility (UAM) aircraft, a ground control system (GCS), and an attacker, according to at least one embodiment of the present disclosure.
FIG. 8 is a diagram illustrating a configuration of a GCS that receives status information of a UAM aircraft, according to at least one embodiment of the present disclosure.
FIG. 9 is a diagram illustrating the operation steps of a GCS, according to at least one embodiment of the present disclosure.
FIG. 10 is a diagram illustrating a relationship between a plurality of UAM aircraft, a GCS, and an attacker, according to at least one embodiment of the present disclosure.
FIG. 11 is a diagram illustrating the other UAM aircraft's configuration receiving status information from multiple UAM aircraft, according to at least one embodiment of the present disclosure.
FIG. 12 is a diagram illustrating the operation steps of a GCS and a UAM aircraft receiving status information of multiple UAM aircraft, according to at least one embodiment of the present disclosure.
FIG. 13 is a diagram illustrating a method performed by one or more UAM aircraft for verifying the status information of a UAM aircraft, according to at least one embodiment of the present disclosure.
FIG. 14 is a diagram illustrating a method performed by a GCS for verifying the status information of a UAM aircraft, according to at least one embodiment of the present disclosure.
FIG. 15 is a diagram to illustrate a method performed by a GCS for verifying the status information of a UAM aircraft, according to another embodiment of the present disclosure.

### [Detailed Description]

A variety of modifications may be made to the present disclosure and there are various embodiments of the present disclosure, examples of which will now be provided with reference to drawings and described in detail. However, the present disclosure is not limited thereto, although the exemplary embodiments can be construed as including all modifications, equivalents, or substitutes in a technical concept and a technical scope of the present disclosure. Similar reference numerals refer to the same or similar functions in various aspects. In the drawings, the shapes and dimensions of elements may be exaggerated for clarity. In the following detailed description of the present disclosure, references are made to the accompanying drawings that show, by way of illustration, specific embodiments in which the disclosure may be practiced. These embodiments are described in sufficient detail to enable those skilled in the art to implement the present disclosure. It should be understood that various embodiments of the present disclosure, although different, are not necessarily mutually exclusive. For example, specific features, structures, and characteristics described herein, in connection with one embodiment, may be implemented within other embodiments without departing from the spirit and scope of the present disclosure. In addition, it should be understood that the location or arrangement of individual elements within each disclosed embodiment may be modified without departing from the idea and scope of the present disclosure. The following detailed description is, therefore, not to be taken in a limiting sense, and the scope of the present disclosure is defined only by the appended claims, appropriately interpreted, along with the full range of equivalents to what the claims claim.

Terms used in the specification, 'first', 'second', etc. can be used to describe various components, but the components are not to be construed as being limited to the terms. The terms are only used to differentiate one component from other components. For example, the 'first' component may be named the 'second' component without departing from the scope of the present disclosure, and the 'second' component may also be similarly named the 'first' component. The term 'and/or' includes a combination of a plurality of items or any one of a plurality of terms.

It will be understood that when an element is simply referred to as being 'connected to' or 'coupled to' another element without being 'directly connected to' or 'directly coupled to' another element in the present description, it may be 'directly connected to' or 'directly coupled to' another element or be connected to or coupled to another element, having the other element intervening therebetween. In contrast, it should be understood that when an element is referred to as being "directly coupled" or "directly connected" to another element, there is no presence of intervening elements.

Constitutional parts shown in the embodiments of the present disclosure are independently shown to represent characteristic functions different from each other. Thus, it does not mean that each constitutional part is constituted in a constitutional unit of separated hardware or software. In other words, each constitutional part includes each of the enumerated constitutional parts for convenience. Thus, at least two constitutional parts of each constitutional part may be combined to form one constitutional part or one constitutional part may be divided into a plurality of constitutional parts to perform each function. The embodiment where each constitutional part is combined and the embodiment where one constitutional part is divided are also included in the scope of the present disclosure, if not departing from the essence of the present disclosure.

The terms used in the present specification are merely used to describe particular embodiments and are not intended to limit the present disclosure. An expression used in the singular encompasses the expression of the plural unless it has a different meaning in the context. In the present specification, it is to be understood that terms such as "including", "having", etc. are intended to indicate the existence of the features, numbers, steps, actions, elements, parts, or combinations thereof disclosed in the specification, and are not intended to preclude the possibility that one or more other features, numbers, steps, actions, elements, parts, or combinations thereof may exist or may be added. In other words, when a specific element is referred to as being "included", elements other than the corresponding element are not excluded, but additional elements may be included in embodiments of the present disclosure or the scope of the present disclosure.

Some of the constituents may not be indispensable constituents performing essential functions of the present disclosure but be selective constituents improving only the performance thereof. The present disclosure may be implemented by including only the indispensable constitutional parts for implementing the essence of the present disclosure except the constituents used in improving performance. The structure including only the indispensable constituents except the selective constituents used in improving only performance is also included in the scope of the present disclosure.

Hereinafter, embodiments of the present disclosure will be described in detail with reference to the accompanying drawings. In describing exemplary embodiments of the present disclosure, well-known functions or constructions will not be described in detail since they may unnecessarily obscure the understanding of the present disclosure. The same constituent elements in the drawings are denoted by the same reference numerals, and a repeated description of the same elements will be omitted.

Hereinafter, some embodiments of the present disclosure will be described in detail with reference to the accompanying illustrative drawings. In the following description, like reference numerals preferably designate like elements, although the elements are shown in different drawings. Further, in the following description of some embodiments, a detailed description of related known components and functions when considered to obscure the subject of the present disclosure will be omitted for the purpose of clarity and for brevity.

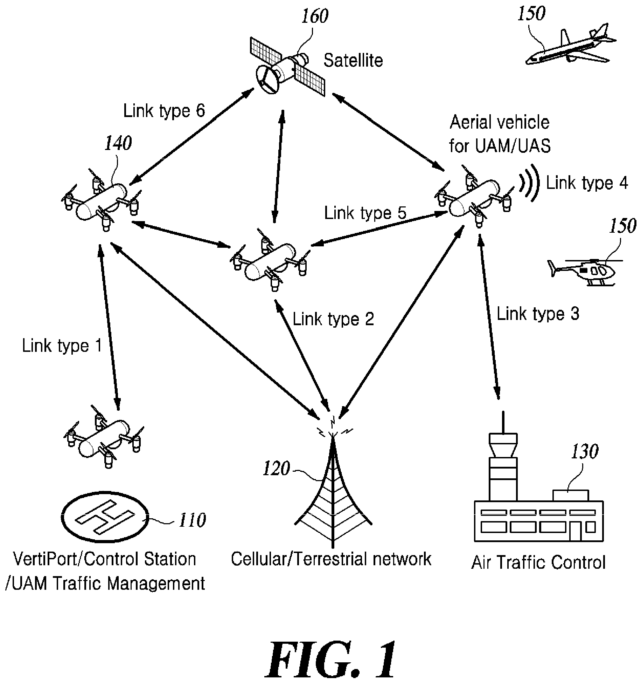

FIG. 1 is a diagram illustrating a communication link type of an urban air mobility (UAM) service. Aircraft may be classified into those capable of conventional take off and landing (CTOL), short take off and landing (STOL), and vertical take off and landing (VTOL) according to the length of a takeoff and landing runway. The CTOLs require a long runway for taking off and landing, and the STOLs and the VTOLs each require requires a short runway or do not require a runway at all. Electrical vertical take off and landing (E-VTOL) is a technology in which an aircraft vertically takes off and lands by using electric power.

The E-VTOL may be used for UAM or advanced air mobility (AAM) services in urban areas. The E-VTOL features vertical takeoff and landing, lift electrification, rotor rotation, autopilot, semi-autopilot, and remote pilot. Application programs can be written for UAM and AAM services to implement passenger transport including taxiplanes, emergency services for purposes such as rescue and first aid, recreational activities and cargo delivery services, etc. Classified as an unmanned aircraft system (UAS) is a crewless controlled or remotely controlled aircraft with a specific purpose, such as cargo transport, atmospheric research, or surveillance. To provide safe and accurate aviation and broadband communication services in an aircraft, the E-VTOL may use various communication links and types including traditional air traffic communication, automatic dependent surveillance-broadcast (ADS-B), global navigation satellite system (GNSS), cellular networks, command and control (C2) and satellite communication.

Air traffic communication may be used to prevent interference in a piloting area between two aircraft and between an aircraft and an obstacle and to maintain order in air traffic. ADS-B may be used for air traffic control by transmitting location information to another aircraft and an air traffic control station by using a very high frequency (VHF) frequency bandwidth. Vehicle to vehicle (V2V) communication may be used for aircraft-to-aircraft communication to share information between two aircraft by using cellular networks and prevent collisions therebetween.

GNSS may be equivalent to global positioning, navigation, and timing determination functions combined and made available to one or more satellites. GNSS may be augmented by ground stations or stationary satellites to improve integrity and positioning accuracy. Satellite communication (SatCom) may be used to provide broadband services in aircraft cabins using satellite communication channels. Cellular communication may be used to provide broadband services in aircraft cabins and to provide command and control (C2) communications via cellular network channels. Wi-Fi may be used to provide broadband services in aircraft cabins through SatCom or cellular networks. C2 may be equivalent to a data link between a remotely piloted aircraft and a remote pilot for flight management.

Referring to FIG. 1, a control station 110 and a UAM aircraft 140 may transmit and receive control information, control commands, and flight information via link type 1. The link type 1 may include C2, cellular communication, etc. A cellular network 120 and the UAM aircraft 140 may transmit and receive control information, control command, and broadband data via link type 2. The link type 2 may include cellular communication. An air traffic control station 130 and the UAM aircraft 140 may transmit and receive flight information via link type 3. The link type 3 may include air traffic communication. The UAM aircraft 140 may transmit and receive flight information to and from an airplane 150 and a helicopter 155 via link type 4. The link type 4 may include ADS-B. Two UAM vehicles may transmit and receive flight information between them via link type 5. The link type 5 may include V2V and ADS-B. The UAM aircraft 140 and a satellite 160 may transmit and receive time information, location information, control command, control information, and broadband data to and from each other via link type 6. The link type 6 may include GNSS, C2, and SatCom.

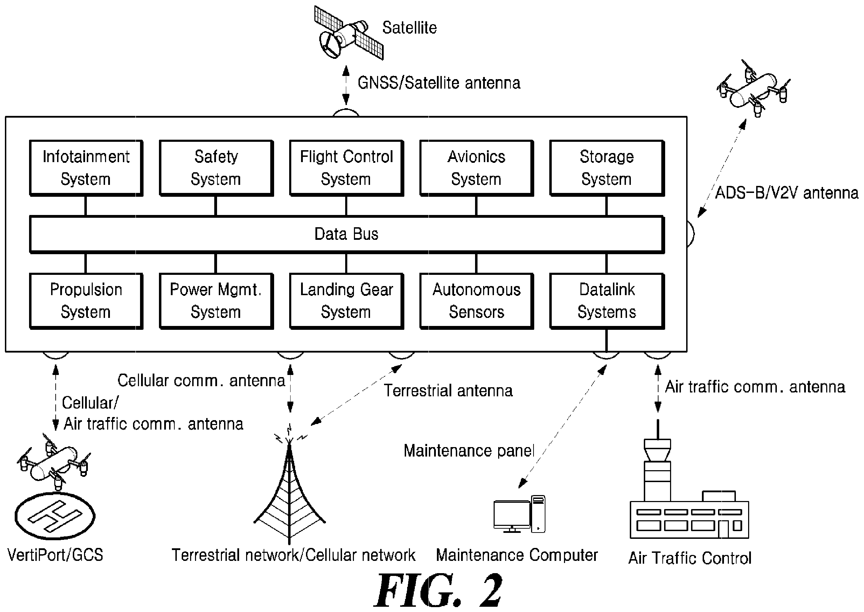

FIG. 2 is a diagram illustrating the architecture of UAM aircraft networks and systems structure of a UAM aircraft. Various types of antennas for communicating with external entities are provided on the surface of the UAM aircraft. The UAM aircraft is provided internally with the aircraft system structure connected to a data bus.

Referring to FIG. 2, the UAM aircraft has on a surface thereof various types of antennas to communicate with satellites, other UAM aircraft, air traffic control stations, maintenance computers, cellular networks, and a ground control system(GCS). The UAM aircraft systems may include a data bus, infotainment system, datalink system, storage system, flight control system, autonomous sensor, propulsion system, emergency system, landing gear system, power management system, avionics system, security manager terminals, and a maintenance panel. A security manager boarding the UAM aircraft may monitor or access the UAM aircraft systems.

The data bus may be used for an in-flight network to transmit massive data between the various systems. The infotainment system may be used to provide in-cabin entertainment services. The data link system may provide communication functions in and out of the UAM aircraft. The data link system may be communicatively connected to the pilot terminal to transmit or receive various pieces of information. The storage system may serve to manage various data storage systems used in the aircraft. The flight control system may be used for flight controls, connecting links, and actuation mechanisms required for controlling the direction of the aircraft during flight. The autonomous sensor may be used for various cameras and sensors inside and outside the aircraft. The propulsion system may be used to control propelling parts of the aircraft. The emergency system may be used to provide a safety function for passengers and emergencies. The landing gear system may be used for the takeoff and landing of the aircraft. The power management system may control the electric power of the aircraft. The avionics system may include system integration, data logging, navigation assistance and collision avoidance functions. The maintenance panel may be used to maintain, diagnose, and download flight logs and software updates.

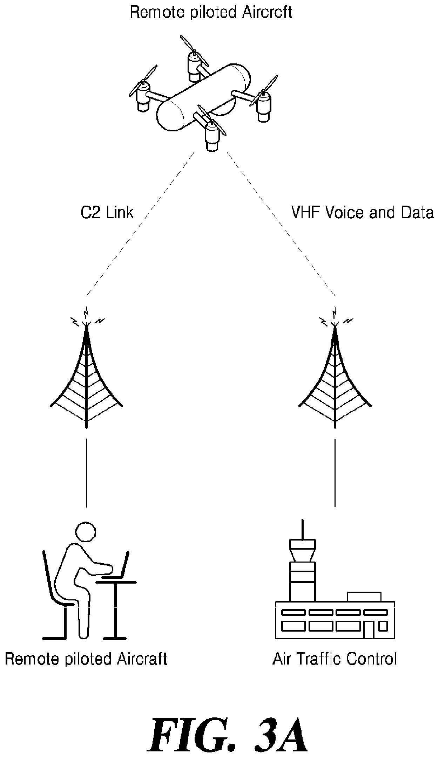

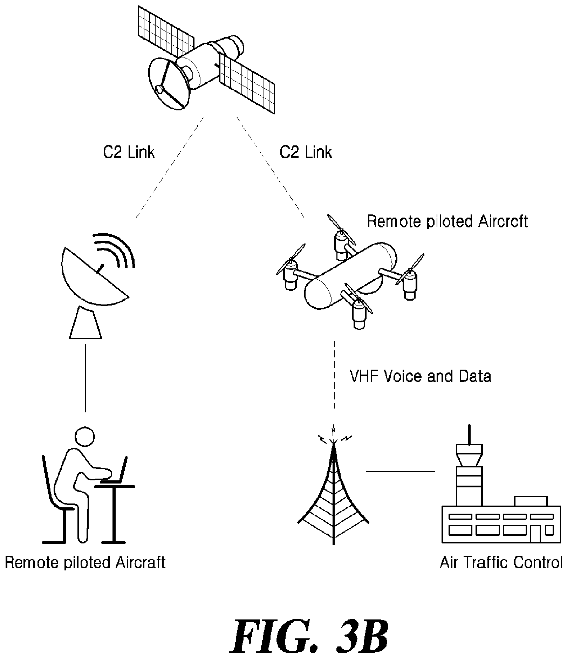

FIGS. 3A and 3B are diagrams illustrating a system for remotely piloting the UAM aircraft. A pilot may remotely pilot the UAM aircraft via radio communication. The remote piloted aircraft system may handle both a radio line of sight (RLOS) situation and a beyond radio line of sight (BRLOS) situation.

Referring to FIG. 3A for the RLOS situation, a remote pilot station may control a remotely piloted aircraft through a C2 link. The pilot may operate the UAM aircraft that has been authenticated. A security manager may board the UAM aircraft to serve passengers and ensure safety. In the RLOS situation, the remotely piloted aircraft may transmit and receive information to and from the air traffic control station by using the VHF frequency bandwidth. In the RLOS situation, the remote pilot station and the air traffic control station may directly communicate with the UAM aircraft and may visually check the status of the aircraft.

Referring to FIG. 3B for the BRLOS situation, communication is delayed and the status of the UAM aircraft may not be checked by the pilot's naked eye. In the BRLOS situation, the remote pilot station may transmit and receive information to and from the satellite by using the C2 link. In the BRLOS situation, the satellite may transmit and receive information to and from the remotely piloted aircraft by using the C2 link. In the BRLOS situation, the remotely piloted aircraft may transmit and receive information to and from the air traffic control station by using the VHF frequency bandwidth.

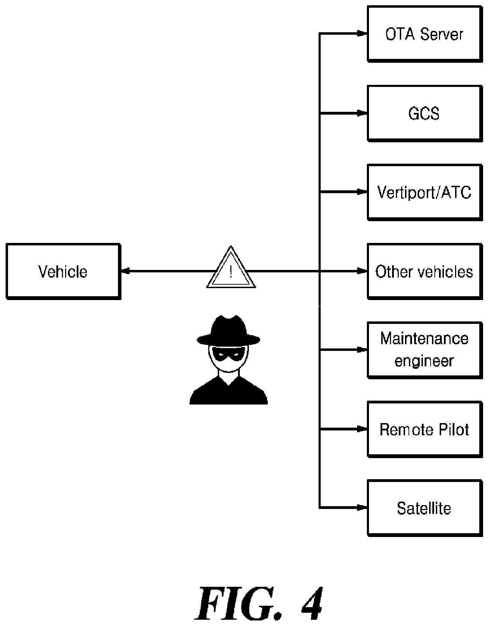

FIG. 4 is a diagram illustrating a relationship between a UAM aircraft, an attacker, and external entities.

Referring to FIG. 4, the attacker may eavesdrop on communication data between the vehicle and the external entities. This may expose UAM control commands, status information, update packages, etc. unguarded. The attacker may obtain private data or use the data for further attacks. The vehicle may include UAM aircraft, vehicles, drones, robots, etc.

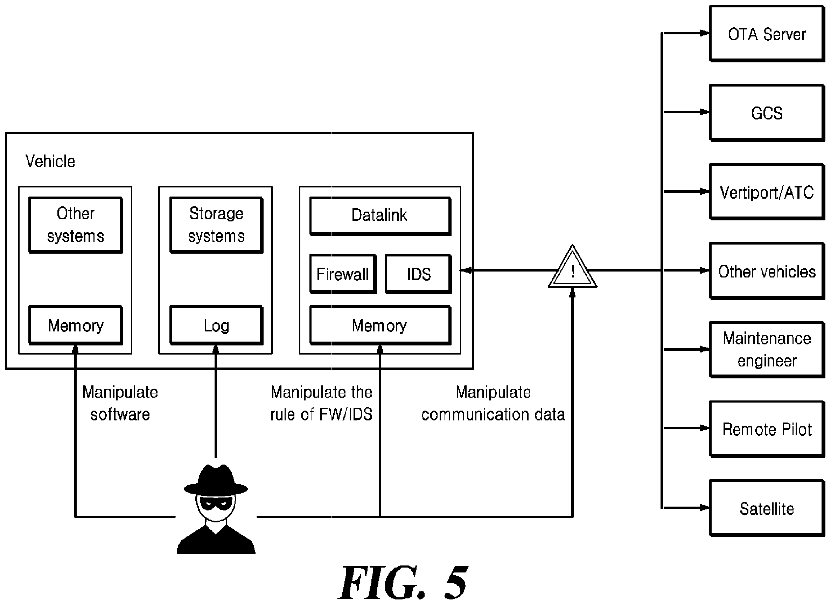

FIG. 5 is a diagram illustrating an attacker's threat to a transportation means.

Referring to FIG. 5, an attacker may manipulate software to attack a transportation device that is a vehicle. The attacker may modify software, such as firmware, scripts, calibration data, etc. The attacker may manipulate log data to attack the vehicle. The attacker may delete or modify log data from intrusion detection systems, firewalls, and wireless systems, especially audit logs of security events. The attacker may manipulate rules in the intrusion detection system (IDS) and firewalls to attack vehicles. The attacker may manipulate the rules in the firewall and IDS to ignore anomalous messages. The attacker may manipulate communication data. The attacker may alter communication messages between the vehicle and external entities.

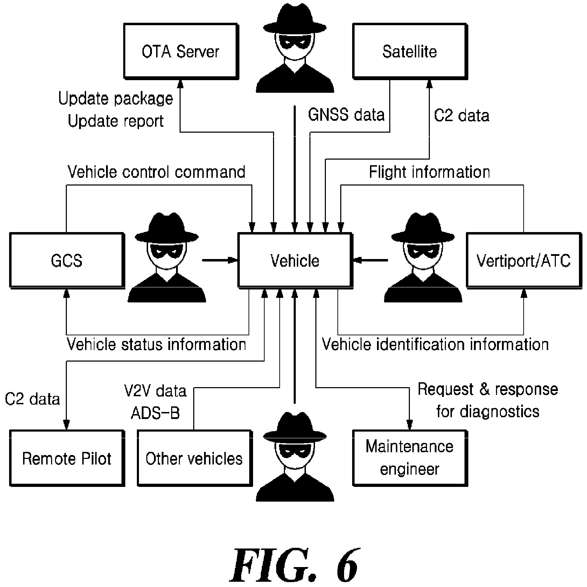

FIG. 6 is a diagram illustrating threats through the impersonation of attackers.

Referring to FIG. 6, attackers may disguise other entities such as a GCS, remote pilot, other vehicles, maintenance engineers, control stations, air traffic control station, satellites, and over-the-air programming (OTA) servers to take control of a transportation device that is a vehicle. An attacker may disguise a GCS and issue UAM aircraft control commands to the vehicle. An attacker may impersonate a remote pilot to send information to the vehicle. An attacker may disguise another UAM aircraft to send information to the vehicle. An attacker may impersonate a maintenance engineer to send diagnostic requests and responses to the vehicle. An attacker may disguise a control station or air traffic control station to send flight information to the vehicle. An attacker may disguise a satellite to send information to the vehicle. An attacker may disguise an OTA server to send update packages and reports to the vehicle. Accordingly, the vehicle needs to receive information from another entity that is authenticated and trusted. Here, the transportation device that is a vehicle may include a UAM aircraft, vehicle, drone, robot, or the like.

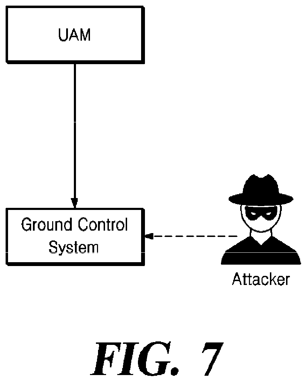

FIG. 7 is a diagram illustrating the relationship between a UAM aircraft, a ground control system (GCS), and an attacker, according to at least one embodiment of the present disclosure.

Referring to FIG. 7, a UAM aircraft during flight may monitor its status and transmit status information to the GCS. The GCS may receive various status information from the UAM aircraft to monitor for anomalies. The GCS may remotely control the UAM aircraft in case of an emergency. The attacker may disguise itself as a legitimate UAM aircraft and send false information to the GCS. This may cause confusion and increased risk to the traffic situation.

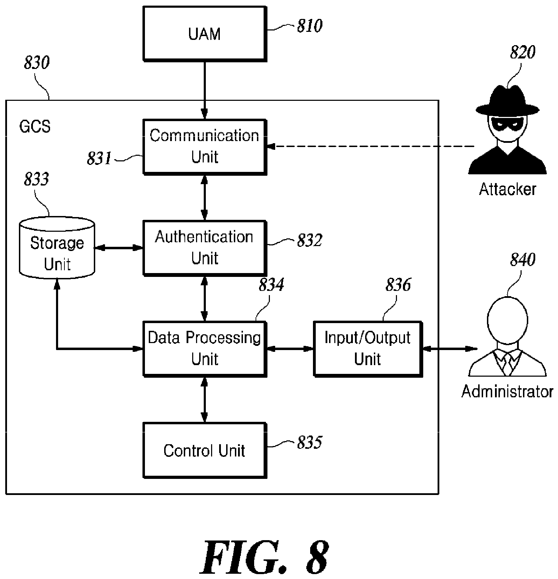

FIG. 8 is a diagram illustrating a configuration of a GCS that receives status information of a UAM aircraft, according to at least one embodiment of the present disclosure.

Referring to FIG. 8, a UAM aircraft 810 may periodically transmit status information to a GCS 830. The status information transmitted by the UAM aircraft 810 may include header information, payload information, global position system (GPS) information, and timestamp information. An attacker 820 may disguise itself as the legitimate UAM aircraft 810 and send false information to the GCS 830. The information received by the GCS 830 may be received by a communication unit 831, and an authentication unit 832 may determine whether the information is false. The authentication unit 832 may receive from a storage unit 833 the status information previously received from the UAM aircraft 810. The authentication unit 832 may verify whether the status information is false by comparing the currently received status information to the previously received status information. The difference between the currently received status information and the previously received status information may be calculated by the authentication unit 832. The calculated information difference may determine whether the direction of travel, location, distance traveled, and speed of the UAM aircraft 810 are reasonable compared to the flight plan.

When the authentication unit 832 determines that the current state information is not false information as a result of verifying thereof, the storage unit 833 may store the current state information received from the authentication unit 832. When the authentication unit 832 determines that the current state information is false information as a result of verifying thereof, the data processing unit 834 may discard the false information received from the authentication unit 832. The control unit 835 may discard the false information of the data processing unit 834 or control the processing of the current status information. The data processing unit 834 may transmit the current state information to an input/output unit 836. The input/output unit 836 may output the current state information to the screen of an administrator 840. The administrator may administer the GCS 830 by viewing the current status information outputted on the screen. The GCS 830 may determine the false information because the attacker 820 cannot know the current GPS information and previous GPS information of the legitimate UAM aircraft 810.

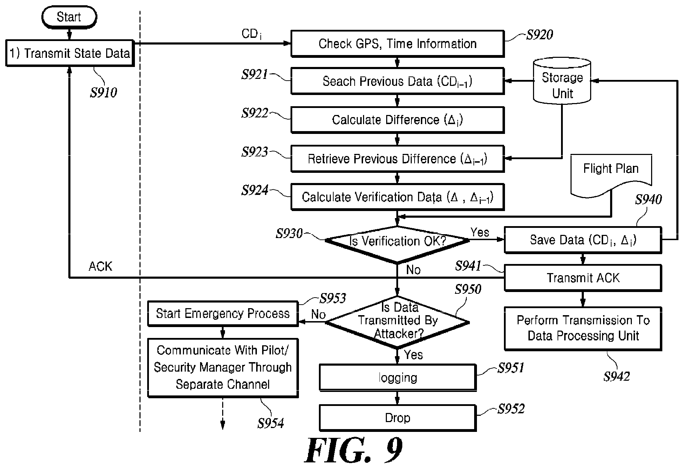

FIG. 9 is a diagram illustrating the operation steps of a GCS, according to at least one embodiment of the present disclosure.

Referring to FIG. 9, the UAM aircraft may transmit status information to the GCS (S910). The UAM aircraft may use an Android Debug Bridge (ADB) or the like to transmit the status information to the GCS. The GCS may receive the current status information from the UAM aircraft and identify GPS information and time information from the current status information (S920). Here, the time information may be equal to the timestamp information. From the storage unit, the previous status information transmitted from the UAM aircraft may be retrieved (S921). The current increment, which is the difference between the current state information and the previous state information, may be calculated (S922). The previous increment may be retrieved from the storage unit (S923). Verification data may be calculated by taking into account the current increment and the previous increment (S924).

Determination may be made whether the verification of the current state information through the verification data was successful (S930). The flight plan may be used to determine whether the verification of the current state information was successful. When the verification is successful (S930-YES), the current state information and current increment may be stored in the storage unit (S940). An ACK may be sent to the UAM aircraft (S941). The UAM aircraft may receive an ACK from the GCS. Payload information may be transmitted to the data processing unit (S942). If the verification fails (S930-NO), it may be determined whether the current status information was transmitted by the attacker (S950).

The GCS may periodically receive status information from the UAM aircraft. The GCS may determine whether it has received normal status information from the UAM aircraft before or after receiving the current status information failed to be verified. The GCS may use this determination to determine whether the verification-failed current state information was transmitted by an attacker. For example, when the GCS receives normal status information from the UAM aircraft at a time before or after the GCS receives the verification-failed current status information, this information may be determined to be information transmitted by the attacker. For example, when the GCS does not receive normal status information from the UAM aircraft at any time before or after receiving the verification-failed current status information, this information may be determined not to be information transmitted by the attacker. When the current state information was sent by the attacker (S950-YES), the received false information may be logged (S951). The received false information may be discarded (S952).

Where the current status information is not sent by the attacker (S950-NO), an emergence process may be initiated (S953). A separate channel may be used to confirm the flight status of the UAM aircraft through the pilot or safety officer of the UAM aircraft (S954). The GCS may take control of the UAM aircraft. Here, the current status information may not be equal to the false information transmitted by the attacker. For the attacker to succeed in the attack, the attacker needs to know the identification information of the UAM aircraft, the flight information such as the location, altitude, direction, and speed of the UAM aircraft, and the flight trajectory and flight plan of the UAM aircraft. Therefore, the present disclosure can effectively defend against the spoofing attack of the attacker.

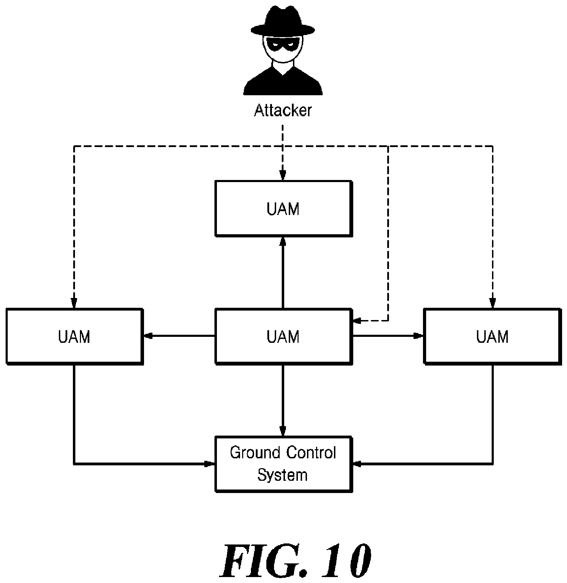

FIG. 10 is a diagram illustrating a relationship between a plurality of UAM aircraft, a GCS, and an attacker, according to at least one embodiment of the present disclosure.

Referring to FIG. 10, the plurality of UAM aircraft may periodically transmit and receive aircraft status information to and from each other by using a medium such as vehicle-to-everything communication (V2X) or automatic dependent surveillance-broadcast (ADS-B). When a UAM aircraft that receives status information from another UAM aircraft determines that the status information is anomalous, the first UAM aircraft may transmit the status information to a GCS. The GCS may receive reports from the first UAM aircraft about abnormal conditions of the other UAM aircraft. The first UAM aircraft that transmitted the abnormal status information may be controlled by the GCS. The attacker may disguise itself as a legitimate UAM aircraft and transmit false information to multiple other UAM aircraft. This may cause confusion and increased risk to traffic.

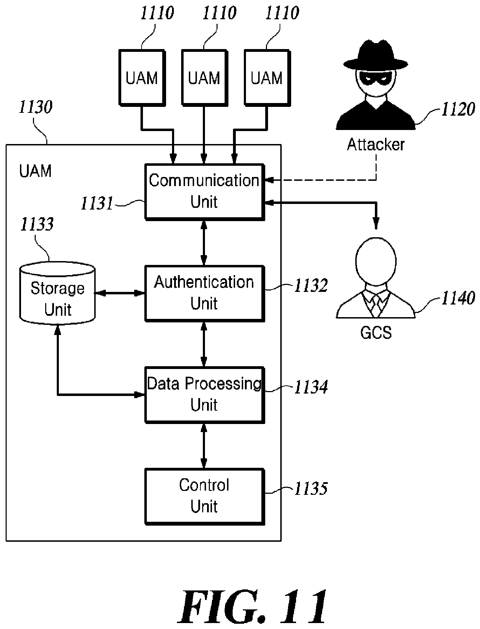

FIG. 11 is a diagram illustrating the other UAM aircraft's configuration receiving status information from multiple UAM aircraft, according to at least one embodiment of the present disclosure.

Referring to FIG. 11, the multiple UAM aircraft 1110 may periodically transmit status information to the other UAM aircraft 1130 via a medium such as DSRC, 5G, ADS-B, or the like. The status information may include header information, payload information, GPS information, and timestamp information. The status information may be transmitted to any other UAM aircraft 1130 without identifying the other UAM aircraft 1130. The other UAM aircraft 1130 may transmit the status information to its communication unit 1131. An authentication unit 1132 of the other UAM aircraft 1130 may verify the current status information by comparing the current status information received with a difference from previous status information received earlier.

The authentication unit 1132 may receive the previous state information that has been received from the storage unit 1133. After calculating the difference between the current state information and the previous state information, the direction of travel, location, distance traveled, and speed may be compared to the flight plan to determine whether the current state information is reasonable. When the current state information fails the verification, the communication unit 1131 may transmit that verification-failed state information to the GCS 1140. The data processing unit 1134 may discard that verification-failed information received from the authentication unit 1132. When the current state information is successfully verified, the current state information may be stored in the storage unit 1133. The control unit 1135 may control the data processing of the data processing unit 1134.

An attacker 1120 may disguise the multiple legitimate UAM aircraft 1110 and transmit false information to the other UAM aircraft 1130. The attacker 1120 does not know the current GPS information and previous GPS information of the multiple legitimate UAM aircraft 1110 currently in flight and therefore cannot transmit legitimate information. The GCS 1140 may receive reports from the other UAM aircraft 1130 of abnormal conditions of the multiple UAM aircraft 1110. Since the attacker 1120 would perform an attack by reporting that the multiple legitimate UAM aircraft 1110 are an anomalous bunch of UAM aircraft, the veracity of the report may be verified by the present disclosure. The GCS 1140 may determine the identification number of the UAM aircraft reported as anomalous and communicate with the pilot or safety personnel by using a separate channel for that UAM aircraft. Through this measure, the GCS 1140 may identify the false information from the attacker 1120 and may install a firewall or update a rule set to instruct the multiple UAM aircraft 1110 to ignore the relevant false information. The rule set may be composed of units of systems' ips and ports of systems that exist outside and inside the network to be protected by the firewall.

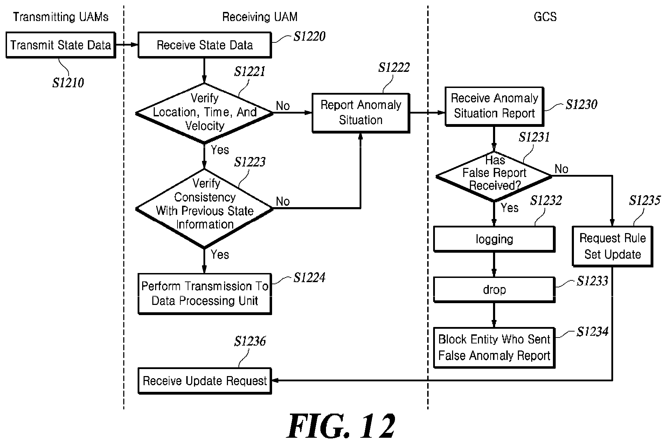

FIG. 12 is a diagram illustrating the operation steps of a GCS and a UAM aircraft receiving status information of multiple UAM aircraft, according to at least one embodiment of the present disclosure.

Referring to FIG. 12, the multiple transmitting UAM aircraft may transmit their status information to other nearby receiving UAM aircraft (S1210). The receiving UAM aircraft may receive the status information from the multiple transmitting UAM aircraft (S1220). By using the status information, the locations, times, speeds, etc. of the multiple transmitting UAM aircraft may be verified (S1221). If the locations, times, speeds, etc. of the multiple transmitting UAM aircraft are not verified (S1221-NO), the receiving UAM aircraft may report the anomaly to the GCS (S1222). When the locations, times, speeds, etc. of the multiple transmitting UAM aircraft have been verified (S1221-YES), the previous state information and the current state information may be verified for consistency (S1223). For example, when the transmission period is 0.1 seconds and the current speed is 100 km/h but the previous speed was 10 km/h, it is unrealistic and may be an anomaly. If the verification of the consistency of the previous state information with the current state information fails (S1223-NO), the receiving UAM aircraft may report the anomaly to the GCS (S1222). When the previous state information and the current state information have been verified for consistency (S1223-YES), the current state information may be transmitted to the data processing unit (S1224).

The GCS may receive an anomaly report (S1230). The GCS may determine whether the received anomaly report is a false report (S1231). An attacker may report a legitimate UAM aircraft as an anomalous UAM aircraft to cause the other UAM aircraft to block status information coming from the legitimate UAM aircraft. To prevent this, whether anomaly reports as false may be determined. Communication between multiple UAM aircraft may involve periodic data transmission and reception, such as V2X. The multiple UAM aircraft within the range of the transmitted and received data may receive the common data. Therefore, when the attacker transmits anomaly information, all UAM aircraft in the area may receive the same anomaly information. All UAM aircraft in receipt of the anomaly may report the UAM aircraft(s) that transmitted the anomaly to the GCS. If the same anomaly is reported by more than one UAM aircraft, the GCS may determine whether the anomaly reports are false as follows.

First, it may be determined whether the two or more UAM aircraft that reported the anomaly are UAM aircraft in the same area. If the two or more UAM aircraft are not UAM aircraft in the same area, the anomaly report may be a false report. Further, it may be determined whether the anomaly reports are from the same time zone. If the anomaly reports are not from the same time zone, the anomaly reports may be false. If the two or more UAM aircraft that reported the anomaly are UAM aircraft in the same region and the reports of the anomaly are from the same time zone, the anomaly reports may not be false.

If only one UAM aircraft is present in the same communication area, a single UAM aircraft may report an anomaly instead of two or more UAM aircraft reporting a common anomaly. In this case, the GCS and the pilot or security manager may be connected by using a different communication medium than the communication medium of this UAM aircraft. The received information may then be verified for anomalies. The data from the UAM aircraft that reported the anomaly may be verified to determine whether the anomaly report is false. In this way, with multiple UAM aircraft sending and receiving status information therebetween, the location of the UAM aircraft may be a criterion for determining whether an anomaly report is a false report. On the other hand, if the GCS is transmitting and receiving status information to and from the UAM aircraft, the location of the GCS may be fixed. Therefore, the location of the GCS may not be a criterion in determining whether the information is false.

If the received anomaly is a false report (S1231-YES), the false report may be logged (S1232). The current status information may be dropped (S1233). The reception of data from the entity that sent the false report may be blocked (S1234). When the received anomaly is not a false report (S1231-NO), the GCS may request the receiving UAM aircraft to update its rule set to block receiving information from the attacker (S1235). In connection with the rule set update, multiple UAM aircraft may send and receive status information to and from each other via V2X. Here, the V2X may use a certificate to electronically sign the information with its certificate at the transmitting end and send the signed certificate to the receiving end.

The receiving end may verify the certificate. The validity of the certificate may be determined by using a certification revocation list (CRL). The validity of the certificate may be determined based on whether it is a revoked certificate. A CRL may be a list of serial numbers of certificates that are no longer valid for certain reasons. Upon receiving the status information, the UAM aircraft may check whether the certificate accompanied has been revoked. If any UAM aircraft has an abnormality, the GCS may register that UAM aircraft in the CRL and send an updated CRL to other multiple UAM aircraft. Other multiple UAM aircraft that receive the CRL may take the UAM aircraft using the revoked certificate as an attacker and discard the status information received from the attacker. The receiving UAM aircraft may receive a corresponding request (S1236).

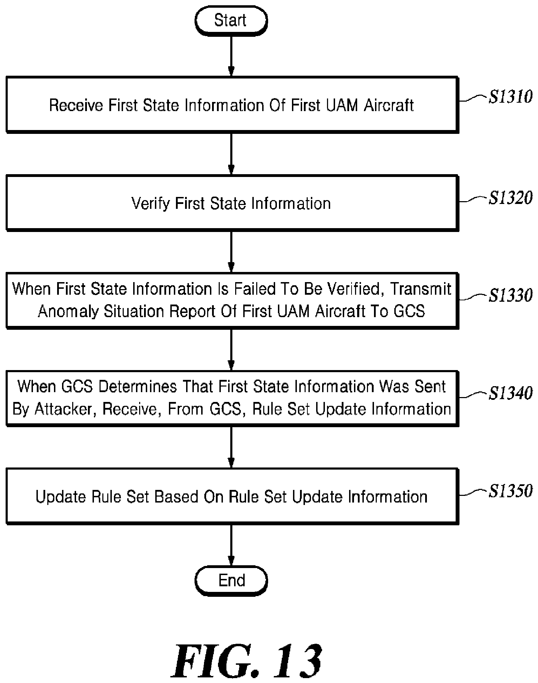

FIG. 13 is a diagram illustrating a method performed by one or more UAM aircraft for verifying the status information of a UAM aircraft, according to at least one embodiment of the present disclosure.

Referring to FIG. 13, one or more UAM aircraft may receive the first status information of a first UAM aircraft (S1310). The one or more UAM aircraft may verify the first state information (S1320). The first status information may include at least one of header information, payload information, GPS information, and timestamp information. The step of verifying the first state information may include retrieving the first UAM aircraft's second state information present in the storage unit and verifying the first state information based on the first state information and the second state information. The second status information may be information received before receiving the first status information.

If the first state information cannot be verified, the one or more UAM aircraft may transmit the anomaly information of the first UAM aircraft to the GCS (S1330). If the GCS determines that the first state information was sent by an attacker, the one or more UAM aircraft may receive rule set update information from the GCS (S1340). The one or more UAM aircraft may update the rule set based on the rule set update information (S1350). Based on the updated rule set, the attacker's information may be blocked.

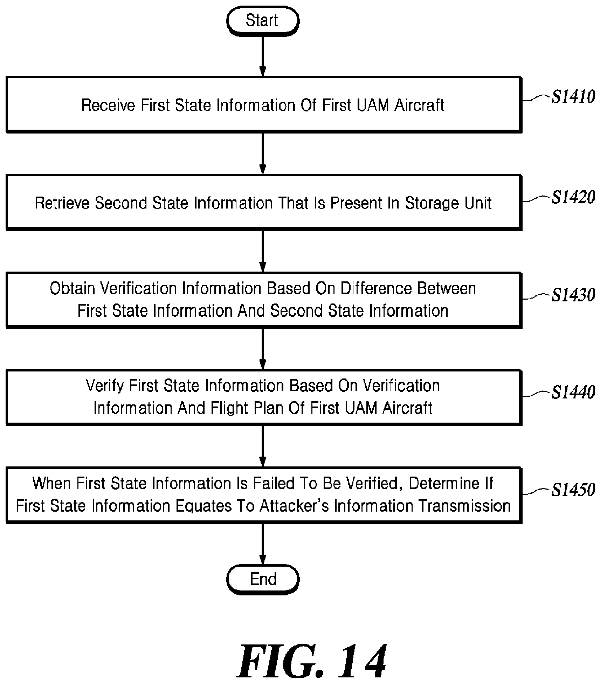

FIG. 14 is a diagram illustrating a method performed by a GCS for verifying the status information of a UAM aircraft, according to at least one embodiment of the present disclosure.

Referring to FIG. 14, the GCS may receive the first status information of the first UAM aircraft (S1410). The GCS may retrieve the second state information present in the storage unit (S1420). The GCS may obtain verification information based on a difference between the first state information and the second state information (S1430). The GCS may verify the first state information based on the verification information and the flight plan of the first UAM aircraft (S1440). If the first state information cannot be verified, the GCS may determine whether the first state information is equal to information transmitted by the attacker (S1450). If the first state information is equal to information sent by the attacker, the GCS may discard the first state information. If the first state information is not equal to the information transmitted by the attacker, the GCS may take control of the first UAM aircraft. The first status information may include at least one of header information, payload information, GPS information, and timestamp information. The second state information may be equal to information received before receiving the first state information. Whether the first status information is equal to information transmitted by the attacker may be determined based on status information periodically received from the first UAM aircraft.

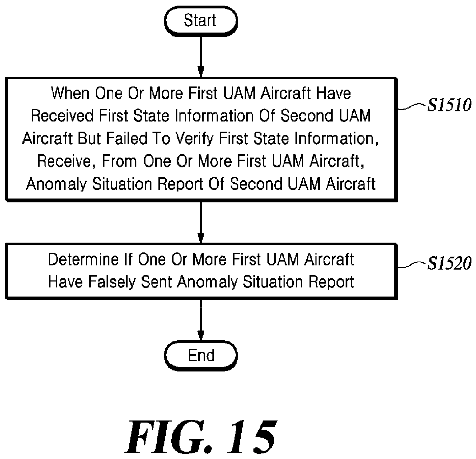

FIG. 15 is a diagram to illustrate a method performed by a GCS for verifying the status information of a UAM aircraft, according to another embodiment of the present disclosure.

Referring to FIG. 15, when one or more first UAM aircraft receives the first status information of the second UAM aircraft, and the first status information cannot be verified by the one or more first UAM aircraft, the GCS may receive anomaly information of the second UAM aircraft from the one or more first UAM aircraft (S1510). The GCS may determine whether the one or more first UAM aircraft transmitted the anomaly information falsely (S1520). The step of determining that the one or more first UAM aircraft falsely transmitted the anomaly information may include determining that the one or more first UAM aircraft are present in the same region and determining that the one or more first UAM aircraft transmitted the anomaly information from the same time zone. The step of determining that the one or more first UAM aircraft falsely transmitted the anomaly information may include verifying the first status information of the second UAM aircraft.

If the one or more first UAM aircraft falsely transmitted the anomaly information, the GCS may discard the anomaly information. The GCS may block the information transmitted by the one or more first UAM aircraft. Where the one or more first UAM aircraft did not falsely transmit the anomaly information, the GCS may send rule set update information to the one or more first UAM aircraft.

In the above-described embodiments, the methods are described based on the flowcharts with a series of steps or units, but the present disclosure is not limited to the order of the steps, and rather, some steps may be performed simultaneously or in a different order with other steps. In addition, it should be appreciated by one of ordinary skill in the art that the steps in the flowcharts do not exclude each other and that other steps may be added to the flowcharts or some of the steps may be deleted from the flowcharts without influencing the scope of the present disclosure.

The embodiments include various aspects of examples. All possible combinations for various aspects may not be described, but those skilled in the art will be able to recognize different combinations. Accordingly, the present disclosure may include all replacements, modifications, and changes within the scope of the claims.

The embodiments of the present disclosure may be implemented in the form of program instructions, which are executable by various computer components, and recorded in a computer-readable recording medium. The computer-readable recording medium may include stand-alone or a combination of program instructions, data files, data structures, etc. The program instructions recorded in the computer-readable recording medium may be specially designed and constructed for the present disclosure, or well-known to a person of ordinary skill in the computer software technology field. Examples of computer-readable recording mediums include magnetic recording media such as hard disks, floppy disks, and magnetic tapes; optical data storage media such as CD-ROMs or DVD-ROMs; magneto-optimum media such as floptical disks; and hardware devices, such as read-only memory (ROM), random-access memory (RAM), flash memory, etc., which are particularly structured to store and implement the program instruction. Examples of the program instructions include not only a mechanical language code formatted by a compiler but also a high-level language code that may be implemented by a computer using an interpreter. The hardware devices may be configured to be operated by one or more software modules or vice versa to conduct the processes according to the present disclosure.

Although the present disclosure has been described in terms of specific items such as detailed elements as well as the limited embodiments and the drawings, they are only provided to help a more general understanding of the disclosure, and the present disclosure is not limited to the above embodiments. It will be appreciated by those skilled in the art to which the present disclosure pertains that various modifications and changes may be made from the above description.

Therefore, the idea of the present disclosure shall not be limited to the above-described embodiments, and the entire scope of the appended claims and their equivalents will fall within the scope and idea of the disclosure.

## Claims

1. A method performed by an urban air mobility (UAM) aircraft, the method comprising:
receiving first state information of a first UAM aircraft;
verifying the first status information;
transmitting anomaly information of the first UAM aircraft to a ground control system (GCS) when the first status information is not verified;
receiving rule set update information from the GCS when the GCS determines that the first status information is information transmitted by an attacker; and
updating a rule set based on the rule set update information.

2. The method of claim 1, wherein, based on the rule set being updated, information from the attacker is blocked.

3. The method of claim 1, wherein the first state information comprises at least one of header information, payload information, global position system (GPS) information, and timestamp information.

4. The method of claim 1, wherein the verifying the first status information comprises:
retrieving second status information of the first UAM aircraft, which is present in a storage unit; and
verifying the first status information based on the first status information and the second status information.

5. The method of claim 4, wherein the second status information is equivalent to information received before the receiving of the first status information.

6. A method performed by a ground control system (GCS), the method comprising:
receiving first status information of a first UAM aircraft;
retrieving second state information present in a storage unit;
obtaining verification information based on a difference between the first state information and the second state information;
verifying the first state information based on the verification information and a flight plan of the first UAM aircraft; and
determining whether the first state information is equivalent to information transmitted by an attacker when the first state information is not verified.

7. The method of claim 6, further comprising:
discarding the first state information when the first state information is equivalent to the information transmitted by the attacker.

8. The method of claim 6, further comprising:
controlling the first UAM aircraft when the first status information is not equivalent to the information transmitted by the attacker.

9. The method of claim 6, wherein the first state information comprises at least one of header information, payload information, global position system (GPS) information, and timestamp information, and
wherein a determination is made whether the first status information is equivalent to the information transmitted by the attacker based on status information periodically received from the first UAM aircraft.

10. The method of claim 6, wherein the second status information is equivalent to information received before the receiving of the first status information.

11. A method performed by a ground control system (GCS), the method comprising:
receiving, from one or more first UAM aircraft, anomaly information of a second UAM aircraft when the one or more first UAM aircraft receive first status information of the second UAM aircraft and the first status information is not verified by the one or more first UAM aircraft; and
determining whether the one or more first UAM aircraft have falsely transmitted the anomaly information.

12. The method of claim 11, further comprising:
discarding the anomaly information when the one or more first UAM aircraft have falsely transmitted the anomaly information; and
blocking information transmitted by the one or more first UAM aircraft.

13. The method of claim 11, further comprising:
transmitting rule set update information to the one or more first UAM aircraft when the one or more first UAM aircraft did not falsely transmit the anomaly information.

14. The method of claim 11, wherein the determining whether the one or more first UAM aircraft having been falsely transmitted the anomaly information comprises:
determining whether the one or more first UAM aircraft are present in a same area; and
determining whether the one or more first UAM aircraft have transmitted the anomaly information during a same time period.

15. The method of claim 11, wherein the determining the one or more first UAM aircraft having been falsely transmitted the anomaly information comprises:
verifying the first status information of the second UAM aircraft.

16. A ground control system (GCS), comprising:
a memory; and
at least one processor,
wherein the at least one processor is configured to:
receive first status information of a first UAM aircraft,
retrieve second state information present in a storage unit,
obtain verification information based on a difference between the first state information and the second state information,
verify the first state information based on the verification information and a flight plan of the first UAM aircraft, and
determine whether the first state information is equivalent to information transmitted by an attacker when the first state information is not verified, and
wherein the second status information is equivalent to information received before the receiving of the first status information.

17. The GCS of claim 16, wherein the at least one processor is configured to:
discard the first state information when the first state information is equivalent to the information transmitted by the attacker.

18. The GCS of claim 16, wherein the at least one processor is configured to:
control the first UAM aircraft when the first status information is not equivalent to the information transmitted by the attacker.
